(19) **Europäisches Patentamt / European Patent Office / Office européen des brevets**

(11) **EP 3 936 228 B1**

(12) # EUROPEAN PATENT SPECIFICATION

(45) Date of publication and mention
of the grant of the patent:
**04.03.2026 Bulletin 2026/10**

(21) Application number: **19918252.8**

(22) Date of filing: **07.03.2019**

(51) International Patent Classification (IPC):
**B01J 23/22** (2006.01)     **B01D 53/86** (2006.01)
**B01D 53/90** (2006.01)     **B01J 37/04** (2006.01)
**B01J 37/08** (2006.01)     **F01N 3/20** (2006.01)

(52) Cooperative Patent Classification (CPC):
**B01D 53/8628; B01J 23/22; B01J 35/613;
B01J 35/70; B01J 37/0018; B01J 37/0236;
B01J 37/04; B01J 37/08; B01J 37/086;
F01N 3/2066; F01N 3/28; F01N 13/16;**
B01D 2251/2062; B01D 2255/20723;
B01D 2255/9207;                              (Cont.)

(86) International application number:
**PCT/JP2019/009199**

(87) International publication number:
**WO 2020/179074 (10.09.2020 Gazette 2020/37)**

(54) **DENITRATION CATALYST, AND PRODUCTION METHOD THEREFOR**

DENITRIERUNGSKATALYSATOR UND HERSTELLUNGSVERFAHREN DAFÜR

CATALYSEUR DE DÉNITRATION ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.01.2022 Bulletin 2022/02**

(73) Proprietors:
- **The Chugoku Electric Power Co., Inc.
  Hiroshima-shi, Hiroshima 730-8701 (JP)**
- **Tokyo Metropolitan Public University
  Corporation
  Shinjuku-ku
  Tokyo 163-0926 (JP)**

(72) Inventors:
- **KIYONAGA Eiji
  Hiroshima-shi, Hiroshima 730-8701 (JP)**
- **YOSHIDA Kazuhiro
  Hiroshima-shi, Hiroshima 730-8701 (JP)**
- **MORITA Keiichiro
  Hiroshima-shi, Hiroshima 730-8701 (JP)**

- **MURAYAMA Toru
  Hachioji-shi, Tokyo 192-0397 (JP)**
- **HARUTA Masatake
  Hachioji-shi, Tokyo 192-0397 (JP)**
- **HATA Shinichi
  Hachioji-shi, Tokyo 192-0397 (JP)**
- **INOMATA Yusuke
  Hachioji-shi, Tokyo 192-0397 (JP)**

(74) Representative: **HGF
HGF Europe LLP
Neumarkter Straße 18
81673 München (DE)**

(56) References cited:
CN-A- 106 984 349        CN-A- 107 349 935
CN-A- 108 126 692        JP-A- 2010 167 368
JP-A- 2014 518 759       JP-A- H11 165 068
JP-A- S5 738 939         JP-A- S52 106 389
US-A1- 2018 272 278

- **DATABASE WPI Week 200009, Derwent World
  Patents Index; AN 2000-101833, XP002808087**

**(Cont. next page)**

(52) Cooperative Patent Classification (CPC): (Cont.)
B01D 2257/404; B01D 2258/0283; B01J 2235/00;
B01J 2235/10; B01J 2235/30

**Description**

TECHNICAL FIELD

The present invention relates to a denitration catalyst and a production method thereof.
In more detail, the present invention relates to a denitration catalyst used upon purifying exhaust gas produced by fuel combusting, and a production method thereof.

BACKGROUND ART

As one of the pollutants emitted into air by the combustion of fuel, nitrogen oxides ($NO$, $NO_2$, $NO_3$, $N_2O$, $N_2O_3$, $N_2O_4$, $N_2O_5$) can be exemplified.
The nitrogen oxides induce acid rain, ozone layer depletion, photochemical smog, etc., and have a serious influence on the environment and human bodies; therefore, treatment thereof is an important problem.

As technology for removing the above-mentioned nitrogen oxides, the selective catalytic reduction reaction ($NH_3$-SCR) with ammonia ($NH_3$) as the reductant has been known.
As disclosed in Patent Document 1, a catalyst using titanium oxide as the carrier and supporting vanadium oxide is being widely used as the catalyst used in the selective catalytic reduction reaction.
Titanium oxide has low activity for sulfur oxides, and has high stability; therefore, it is best established as the carrier.

On the other hand, although vanadium oxide plays a main role in $NH_3$-SCR, since it oxidizes $SO_2$ to $SO_3$, it has not been able to support on the order of 1 wt% or more of vanadium oxide.
In addition, with conventional $NH_3$-SCR, since the catalyst made by supporting vanadium oxide on a titanium oxide carrier almost does not react at low temperature, it must be used at high temperatures such as 350 to 400°C.
However, in order to raise the degrees of freedom of design in devices and facilities realizing $NH_3$-SCR and make more efficient, the development of a catalyst exhibiting high nitrogen oxide reduction rate activity at low temperatures has been demanded.

Subsequently, the present inventors have found a denitration catalyst in which vanadium pentoxide is present in at least 43 wt%, having a BET specific surface area of at least 30 $m^2$/g, and which can be used in denitration at 200°C or lower (Patent Document 2).

Patent Document 1: Japanese Unexamined Patent Application, Publication No. 2004-275852
Patent Document 2: Japanese Patent No. 6093101. US 2018/272278 A discloses a vanadium pentoxide catalyst which is prepared by a sol-gel process. Ammonium vanadate is dissolved in an oxalic acid solution. The solution is evaporated, the residue is dried and the dried powder is calcined in air. The V2O5 thus obtained is used as a denitration catalyst.

DISCLOSURE OF THE INVENTION

Problems to be Solved by the Invention

The present inventors, as a result of thorough research trying to achieve a further improvement of the above Patent Document 2, found a denitration catalyst exhibiting a more superior reduction rate activity of nitrogen oxides.

The present invention has an object of providing a catalyst having better denitration efficiency at low temperature compared to the conventional technology, upon the selective catalytic reduction reaction with ammonia as the reductant.

Means for Solving the Problems

The present invention relates to a denitration catalyst of claim 1.

In addition, in the denitration catalyst, having a defect site at which an oxygen deficiency occurs preferably indicates a ratio (P1/P2) of a peak intensity P2 of wavelength 494 to 549 $cm^{-1}$ originating from edge-sharing 3V-Oc stretching vibration relative to a peak intensity P1 of wavelength 462 to 494 $cm^{-1}$ originating from crosslinked V-$O_B$-V bending vibration being 0.98 or less, in infrared transmission spectrum of the denitration catalyst.

In addition, the denitration catalyst is preferably used in denitration at 270°C or lower.

In addition, the denitration catalyst preferably has an absorption edge wavelength of 575 nm or less.

In addition, the denitration catalyst preferably has a BET specific surface area of 15.3 $m^2$/g or more.

In addition, the present invention relates to a production method for the denitration catalyst including a step of adding ethylene glycol to a precursor complex synthesized by mixing ammonium vanadate and oxalic acid, and then firing.

In addition, in the production method, a molar ratio of the oxalic acid to the ammonium vanadate is preferably at least 2.

Effects of the Invention

A denitration catalyst according to the present invention has better denitration efficiency at low temperature compared to the conventional technology, upon the selective catalytic reduction reaction with ammonia as the reductant.

BRIEF DESCRIPTION OF THE DRAWINGS

FIG. 1A is a graph showing the NO conversion rate of vanadium pentoxide catalysts of Examples 1 to 5 and Comparative Examples 1 to 8;

FIG. 1B is a graph showing the temperature dependency of the NO conversion rate of the vanadium pentoxide catalyst of Example 1;

FIG. 2 is a graph showing the reaction rate of the vanadium pentoxide catalysts of Examples 1 to 5 and Comparative Examples 1 to 8;

FIG. 3A is a graph showing the relationship between the carbon content and NO conversion rate of the vanadium pentoxide catalysts of Examples 1 to 5 and Comparative Examples 1 to 8;

FIG. 3B is a graph showing the relationship between the carbon content and reaction rate of the vanadium pentoxide catalysts of Examples 1 to 5 and Comparative Examples 1 to 8;

FIG. 4 is a graph showing the ultraviolet and visible absorption spectrum of the vanadium pentoxide catalysts of Examples 1 to 5 and Comparative Examples 1 to 8;

FIG. 5A is a graph showing the relationship between the adsorption edge wavelength and NO conversion rate of the vanadium pentoxide catalysts of Examples 1 to 5 and Comparative Examples 1 to 8;

FIG. 5B is a graph showing the relationship between the adsorption edge wavelength and reaction rate of the vanadium pentoxide catalysts of Examples 1 to 5 and Comparative Examples 1 to 8;

FIG. 6 is a graph showing the relationship between the adsorption edge wavelength and BET specific surface area of the vanadium pentoxide catalysts of Examples 1 to 5 and Comparative Examples 1 to 7;

FIG. 7A is a graph showing the infrared absorption spectra in the high wavenumber region of the vanadium pentoxide catalysts of Example 1 and Comparative Examples 1 to 4;

FIG. 7B is a graph showing the infrared absorption spectra in the high wavenumber region of the vanadium pentoxide catalysts of Example 3 and Comparative Examples 5, 6 and 7;

FIG. 7C is a graph showing the infrared absorption spectra in the high wavenumber region of the vanadium pentoxide catalysts of Examples 3 to 5;

FIG. 8A is a graph showing the infrared absorption spectra in the low wavenumber region of the vanadium pentoxide catalysts of Example 1 and Comparative Examples 1 to 4;

FIG. 8B is a graph showing the infrared absorption spectra in the low wavenumber region of the vanadium pentoxide catalysts of Example 3 and Comparative Examples 5, 6 and 7;

FIG. 8C is a graph showing the infrared absorption spectra in the low wavenumber region of the vanadium pentoxide catalysts of Examples 3 to 5;

FIG. 9 is a schematic view showing the crystal structure of vanadium pentoxide catalyst;

FIG. 10A is a graph showing the relationship between the infrared absorption spectra (transmittance ratio) and NO conversion rate of the vanadium pentoxide catalysts of Examples 1 to 5 and Comparative Examples 1 to 8;

FIG. 10B is a graph showing the relationship between the infrared absorption spectra (transmittance ratio) and reaction rate of the vanadium pentoxide catalysts of Examples 1 to 5 and Comparative Examples 1 to 8;

FIG. 11A is a TEM image of the vanadium pentoxide catalyst of Comparative Example 1;

FIG. 11B is a TEM image of the vanadium pentoxide catalyst of Comparative Example 1;

FIG. 11C is a TEM image of the vanadium pentoxide catalyst of Example 1;

FIG. 11D is a TEM image of the vanadium pentoxide catalyst of Example 1;

FIG. 12 is a graph showing X-ray photoelectron spectra (XPS) of the vanadium pentoxide catalysts of Example 1 and Comparative Examples 1 to 4;

FIG. 13 is a graph showing the adsorption isotherm of water of the vanadium pentoxide catalysts of Examples 1 to 5 and Comparative Examples 1 to 8;

FIG. 14 is a graph showing the water absorption amount of the vanadium pentoxide catalysts of Examples 1 to 5 and Comparative Examples 1 to 8;

FIG. 15A is a graph showing the relationship between the water absorption amount and NO conversion rate of the vanadium pentoxide catalysts of Examples 1 to 5 and Comparative Examples 1 to 8;

FIG. 15B is a graph showing the relationship between the water absorption amount and reaction rate of the vanadium pentoxide catalysts of Examples 1 to 5 and Comparative Examples 1 to 8; and

FIG. 16 is a graph showing the Raman spectra of the vanadium pentoxide catalysts of Examples 1 to 5 and Comparative Examples 1 to 8.

PREFERRED MODE FOR CARRYING OUT THE INVENTION

Hereinafter, embodiments of the present invention will be explained.

A denitration catalyst of the present invention is a denitration catalyst containing at least 43 wt% by vanadium pentoxide conversion of vanadium oxide, in which the carbon content is at least 0.05 wt%, and having a defect site at which an oxygen deficiency occurs in the crystal structure wherein the denitration catalyst is formed by a method comprising a step of adding ethylene glycol to a precursor complex synthesized by mixing ammonium vanadate and oxalic acid, and then firing.

Such a denitration catalyst can exhibit a high denitration effect even under a low temperature environment, compared to a denitration catalyst such as a vanadium/titanium catalyst which is conventionally used.

Firstly, the denitration catalyst of the present invention contains vanadium oxide.

This vanadium oxide includes vanadium oxide (II) (VO), vanadium trioxide (III) ($V_2O_3$), vanadium tetroxide (IV) ($V_2O_4$), and vanadium pentoxide (V) ($V_2O_5$), and the V element of vanadium pentoxide ($V_2O_5$) may assume the pentavalent, tetravalent, trivalent and divalent form in the denitration reaction.

It should be noted that this vanadium oxide is a main component of the denitration catalyst of the present invention, and may contain other substances within a range no inhibiting the effects of the present invention; however, it is preferably present in at least 50% by vanadium pentoxide conversion, in the denitration catalyst of the present invention.

More preferably, vanadium oxide is preferably present in at least 99% by vanadium pentoxide conversion, in the denitration catalyst of the present invention.

More preferably, vanadium oxide is preferably present at about 100% by vanadium pentoxide conversion, in the denitration catalyst of the present invention.

Secondly, the denitration catalyst of the present invention has a carbon content of at least 0.05 wt%, but can exhibit a high denitration effect even under a low temperature environment, compared to a denitration catalyst such as a vanadium/titanium catalyst which is conventionally used, by containing carbon in such a high concentration.

If impurities gets into the denitration catalyst of the present invention, the crystal structure is not continuous since the amorphous portion is produced in the denitration catalyst, a high denitration effect is exhibited by the lines and planes in the crystal lattice distorting; however, it is assumed that higher denitration effect is exhibited as carbon exists more abundantly as this impurities.

In the embodiment of the present invention, in the selective catalytic reduction reaction with a reaction temperature of 200° C or less using the denitration catalyst having a carbon content of 0.07 wt%, it exhibited a NO conversion rate of 84.3% in the case of no moisture coexistence, and exhibited a NO conversion rate of 51.5% in the case of moisture coexisting.

In addition, in the selective catalytic reduction reaction using the denitration catalyst having a carbon content of 0.16 wt%, it exhibited a NO conversion rate of 100% in the case of no moisture coexistence, and exhibited a NO conversion rate of 60.1% in the case of moisture coexisting.

In addition, in the selective catalytic reduction reaction using the denitration catalyst having a carbon content of 0.17 wt%, it exhibited a NO conversion rate of 87.8% in the case of no moisture coexistence, and exhibited a NO conversion rate of 48.6% in the case of moisture coexisting.

On the other hand, in the selective catalytic reduction reaction using the denitration catalyst having a carbon content of 0.01 wt%, it only exhibited a NO conversion rate of 35.5% in the case of no moisture coexistence, and only exhibited a NO conversion rate of 5.2% in the case of moisture coexisting.

In addition, in the selective catalytic reduction reaction using the denitration catalyst having a carbon content of 0.04 wt%, it only exhibited a NO conversion rate of 39.2% in the case of no moisture coexistence, and only exhibited a NO conversion rate of 5.6% in the case of moisture coexisting.

In addition, in the aforementioned description, although it is stated as preferable for the carbon content in the denitration catalyst to be at least 0.05 wt%, it may more preferably have a carbon content of at least 0.07 wt%.

More preferably, the carbon content may be at least 0.11 wt%. More preferably, the carbon content may be at least 0.12 wt%. More preferably, the carbon content may be at least 0.14 wt%. More preferably, the carbon content may be at least 0.16 wt%. More preferably, the carbon content may be at least 0.17 wt%.

Thirdly, the denitration catalyst of the present invention has a defect site at which oxygen deficiency occurs in the crystal structure.

It should be noted that, herein, "defect site" indicates being a position (site) at which a certain type of atom is not occupied, while being a position (site) which be occupied by this certain atom in the crystal.

In the above way, in the denitration catalyst of the present invention, the structure of the vanadium oxide crystal contained in this denitration catalyst is locally disordered due to mixing of impurities, and can exhibit high denitration effect; however, by impurities getting into the vanadium oxide catalyst of the present invention, it is assumed that a high denitration effect is exhibited by the sites at which oxygen atoms in the crystal structure are deficient appearing.

It should be noted that "site at which oxygen atoms are deficient" is also abbreviated as "oxygen defect site".

It should be noted that, herein, "having a defect site at which oxygen deficiency occurs" refers to a ratio (P1/P2) of a peak intensity P2 of wavenumber 494 to 549 cm$^{-1}$ originating from edge-sharing 3V-$O_C$ stretching vibration, relative to a peak intensity P1 of wavenumber 462 to 494 cm$^{-1}$ originating from crosslinked V-$O_B$-V bending vibration, in the infrared transmission spectrum of the denitration catalyst in the infrared transmission spectrum of the denitration catalyst, being no more than 0.98, after normalizing each spectrum with 1022 to 1016 cm$^{-1}$ originated from terminal V=O stretching vibration in the infrared transmission spectrum of the denitration catalyst, as described in the Examples later.

The wavenumber for calculating this "P1/P2" is the wavenumber in a case of the beginning to the end of the peak; however, in the case of calculating "P1/P2" using the wavenumber of the peak top, it may be calculated as the ratio of the peak intensity P2 of wavenumber 503 to 524 cm$^{-1}$ originating from the edge-sharing 3V-$O_C$ stretching vibration, relative to the peak intensity P1 of wavenumbers 471 to 486 cm$^{-1}$ originating from crosslinked V-$O_B$-V bending vibration.

Furthermore, the denitration catalyst of the present invention may have a line defect in which point defects such as the "defect site at which an oxygen deficiency occurs" are continuously arranged one-dimensionally, a plane defect in which the point defects are continuously arranged two-dimensionally, or a lattice defect such as lattice strain, for example.

In addition, the denitration catalyst of the present invention is preferably used in denitration at 270°C or lower. This is derived from the firing temperature of denitration catalyst of the present invention being 270°C.

On the other hand, in the Examples described later, the denitration catalyst of the present invention exhibits high denitration effect in the selective catalytic reduction reaction at the reaction temperature of 200°C or lower, and thus the denitration catalyst of the present invention is capable of use in denitration at 200°C or lower.

During the selective catalytic reduction reaction, oxidation of $SO_2$ to $SO_3$ is thereby not accompanied, as in the knowledge obtained by the above Patent Document 2.

In addition, in the aforementioned disclosure, the denitration catalyst of the present invention is preferably used in denitration at 270°C or lower; however, it may be preferably used in denitration at 200°C or lower, and even more preferably, it may be used in denitration with a reaction temperature of 100 to 200°C.

More preferably, it may be used in denitration with a reaction temperature of 160 to 200°C.

Alternatively, it may be used in denitration with a reaction temperature of 80 to 150°C.

In addition, the absorption edge wavelength of the denitration catalyst of the present invention is preferably no more than 575 nm.

Generally, a higher denitration effect can be exhibited for catalyst in which the absorption edge wavelength is shifted more to the blue side in this way.

This is derived from the crystal structure collapsing as the absorption edge wavelength is shifted to the blue side.

In the embodiment of the present invention, for example, in the selective catalytic reduction reaction at the reaction temperature of 200°C or lower, made using the denitration catalyst having an absorption edge wavelength of 567.4 nm, it exhibited a NO conversion rate of 61.3% in the case of not coexisting with moisture, and exhibited a NO conversion rate of 28.1% in the case of coexisting with moisture.

In addition, in the selective catalytic reduction reaction using a denitration catalyst having an absorption edge wavelength of 548.2 nm, it exhibited a NO conversion rate of 84.3% in the case of not coexisting with moisture, and exhibited a NO conversion rate of 51.5% in the case of coexisting with moisture.

In addition, with the selective catalytic reduction reaction using a denitration catalyst having an absorption edge wavelength of 547.7 nm, it exhibited a NO conversion rate of 79.2% in the case of not coexisting with moisture, and exhibited a NO conversion rate of 50.6% in the case of coexisting with moisture.

In addition, with the selective catalytic reduction reaction using a denitration catalyst having an absorption edge wavelength of 535.9 nm, it exhibited a NO conversion rate of 87.8% in the case of not coexisting with moisture, and exhibited a NO conversion rate of 48.6% in the case of coexisting with moisture.

In addition, with the selective catalytic reduction reaction using the denitration catalyst having an absorption edge wavelength of 534.5 nm, it exhibited a NO conversion rate of 100% in the case of not coexisting with moisture, and exhibited a NO conversion rate of 60.1% in the case of coexisting with moisture.

On the other hand, with the selective catalytic reduction reaction using the denitration catalyst having an absorption edge wavelength of 587.3 nm, it only exhibited a NO conversion rate of 35.5% in the case of not coexisting with moisture, and exhibited a NO conversion rate of 5.2% in the case of coexisting with moisture.

In addition, also with the selective catalytic reduction reaction using the denitration catalyst having an absorption edge wavelength of 580.1 nm, it only exhibited a NO conversion rate of 39.2% in the case of not coexisting with moisture, and exhibited a NO conversion rate of 5.6% in the case of coexisting with moisture.

In addition, although the absorption edge wavelength of the denitration catalyst is no more than 575 nm, it may preferably be no more than 568 nm.

More preferably, it may be no more than 549 nm.

More preferably, it may be no more than 548 nm.

More preferably, it may be no more than 536 nm.

More preferably, it may be no more than 535 nm.

In addition, the BET specific surface area of the denitration catalyst of the present invention is preferably at least 15.3 $m^2$/g; however, it exhibits higher denitration effect as the catalyst has larger BET specific surface area in this way. It is assumed that this is because the number of sites which absorb more nitrogen oxides increases as the surface area per unit mass of denitration catalyst becomes larger.

In the embodiment of the present invention, with the selective catalytic reduction reaction at a reaction temperature of 200°C or lower using a denitration catalyst having a BET specific surface area of 15.3 $m^2$/g, it exhibited a NO conversion rate of 61.3% in the case of not coexisting with moisture, and exhibited a NO conversion rate of 28.1% in the case of coexisting with moisture.

In addition, with the selective catalytic reduction reaction using a denitration catalyst having a BET specific surface area of 19.2 $m^2$/g, it exhibited a NO conversion rate of 64.2% in the case of not coexisting with moisture, and exhibited a NO conversion rate of 34.7% in the case of coexisting with moisture.

In addition, with the selective catalytic reduction reaction using a denitration catalyst having a BET specific surface area of 24.9 $m^2$/g, it exhibited a NO conversion rate of 79.2% in the case of not coexisting with moisture, and exhibited a NO conversion rate of 50.6% in the case of coexisting with moisture.

In addition, with the selective catalytic reduction reaction using a denitration catalyst having a BET specific surface area of 26.1 $m^2$/g, it exhibited a NO conversion rate of 84.3% in the case of not coexisting with moisture, and exhibited a NO conversion rate of 51.5% in the case of coexisting with moisture.

In addition, with the selective catalytic reduction reaction using a denitration catalyst having a BET specific surface area of 26.7 $m^2$/g, it exhibited a NO conversion rate of 87.8% in the case of not coexisting with moisture, and exhibited a NO conversion rate of 48.6% in the case of coexisting with moisture.

In addition, with the selective catalytic reduction reaction using a denitration catalyst having a BET specific surface area of 29.6 $m^2$/g, it exhibited a NO conversion rate of 100% in the case of not coexisting with moisture, and exhibited a NO conversion rate of 60.1% in the case of coexisting with moisture.

On the other hand, with the selective catalytic reduction reaction at the reaction temperature of 200°C or lower using a denitration catalyst having a BET specific surface area of 15.2 $m^2$/g, it only exhibited a NO conversion rate of 35.5% in the case of not coexisting with moisture, and exhibited a NO conversion rate of 5.2% in the case of coexisting with moisture.

In addition, the BET specific surface area of the denitration catalyst is preferably at least 15.3 $m^2$/g; however, it more preferably may be at least 19.2 $m^2$/g.

More preferably, it may be at least 24.9 $m^2$/g.

More preferably, the BET specific surface area of the denitration catalyst may be 26.1 $m^2$/g.

More preferably, the BET specific surface area of the denitration catalyst may be at least 26.7 $m^2$/g.

More preferably, the BET specific surface area of the denitration catalyst may be at least 29.6 $m^2$/g.

It should be noted that the BET specific surface area of the denitration catalyst is preferably measured based on the criteria defined in JIS Z8830:2013.

The denitration catalyst containing at least 43 wt% of vanadium oxide by vanadium pentoxide conversion, and having carbon content of at least 0.05 wt%, and a defect site at which oxygen deficiency occurs in the crystal structure is prepared by the sol gel method as defined in claim 1

A denitration catalyst produced by a method not falling within the scope of the claims including a step of dissolving ammonium vanadate in oxalate solution, and a step of subsequently drying and firing exhibited a NO conversion rate of 64.2 to 100% in the case of not coexisting with moisture, and exhibited a NO conversion rate of 20.9 to 60.1% in the case of coexisting with moisture.

In addition, a denitration catalyst produced by a method not falling within the scope of the claims including a step of adding only ethylene glycol to ammonium vanadate and drying exhibited a NO conversion rate of 61.3% in the case of not coexisting with moisture, and exhibited a NO conversion rate of 28.1% in the case of coexisting with moisture.

On the other hand, as the denitration catalyst produced by a method not falling within the scope of the claims not including such a step, for example, a denitration catalyst obtained by firing only ammonium vanadate to make vanadium pentoxide, followed by adding only ethylene glycol and firing only exhibited a NO conversion rate of 35.5% in the case of not coexisting with moisture, and exhibited a NO conversion rate of 5.2% in the case of coexisting with moisture.

In addition, a denitration catalyst obtained by a method not falling within the scope of the claims involving firing only ammonium vanadate to make vanadium pentoxide, followed by adding oxalic acid and ethylene glycol and firing only exhibited a NO conversion rate of 39.2% in the case of not coexisting with moisture, and exhibited a NO conversion rate of 5.6% in the case of coexisting with moisture.

In addition, the denitration catalyst of the present invention, in the embodiment, is produced by a method which adds ethylene glycol to a precursor complex synthesized by mixing ammonium vanadate and oxalic acid, and then firing. The denitration catalyst produced by such a method can exhibit a high denitration effect even under a low temperature environment, compared to a denitration catalyst such as a vanadium/titanium catalyst which is conventionally used. This is assumed to be because the carbon content in the denitration catalyst becomes high by adding ethylene glycol.

In the embodiment of the present invention, a denitration catalyst produced by a method of adding ethylene glycol to precursor complex synthesized by mixing ammonium vanadate and oxalic acid, and then firing exhibited a NO conversion rate of 64.2 to 100% in the case of not coexisting with moisture, and exhibited a NO conversion rate of 34.7 to 60.1% in the case of coexisting with moisture.

On the other hand, for example, a denitration catalyst produced by a method not falling within the scope of the claims of adding propylene glycol to precursor complex synthesized by mixing ammonium vanadate and oxalic acid, and then firing exhibited a NO conversion rate of 51.6% in the case of not coexisting with moisture, and exhibited a NO conversion rate of 20.9% in the case of coexisting with moisture.

In addition, in the above-mentioned production method, the molar ratio of oxalic acid to the ammonium vanadate is at least 2.

The denitration catalyst produced by such a method can exhibit high denitration effect even under a low temperature environment, compared to a denitration catalyst such as a vanadium/titanium catalyst which is conventionally used.

The matter of this originating from the vanadium pentoxide becoming higher specific surface area by adding oxalic acid serves as the reason.

In the above-mentioned production method according to the embodiment of the present invention, the denitration catalyst produced by a method in which the molar ratio of oxalic acid to ammonium vanadate becomes 2 exhibited a NO conversion rate of 84.3% in the case of not coexisting with moisture, and exhibited a NO conversion rate of 51.5% in the case of coexisting with moisture.

In addition, the denitration catalyst produced by a method in which the molar ratio of oxalic acid to ammonium vanadate becomes 3 exhibited a NO conversion rate of 51.6 to 79.2% in the case of not coexisting with moisture, and exhibited a NO conversion rate of 20.9 to 50.6% in the case of coexisting with moisture.

In addition, the denitration catalyst produced by a method in which the molar ratio of oxalic acid to ammonium vanadate becomes 6 exhibited a NO conversion rate of 64.2% in the case of not coexisting with moisture, and exhibited a NO conversion rate of 34.7% in the case of coexisting with moisture.

In addition, the denitration catalyst produced by a method in which the molar ratio of oxalic acid to ammonium vanadate becomes 9 exhibited a NO conversion rate of 87.8% in the case of not coexisting with moisture, and exhibited a NO conversion rate of 48.6% in the case of coexisting with moisture.

In addition, the denitration catalyst produced by a method in which the molar ratio of oxalic acid to ammonium vanadate becomes 15 exhibited a NO conversion rate of 100% in the case of not coexisting with moisture, and exhibited a NO conversion rate of 60.1% in the case of coexisting with moisture.

It should be noted that the above-mentioned sol gel method, preferably includes a step of dissolving vanadate in oxalic acid, so that the molar ratio of vanadate and oxalic acid becomes 1:2 to 1:15, for example.

It should be noted that the molar ratio of vanadate and oxalic acid preferably may be 1:3 to 1:15.

More preferably, the molar ratio of vanadate and oxalic acid may be 1:6 to 1:15.

More preferably, the molar ratio of vanadate and oxalic acid may be 1:9 to 1:15.

More preferably, the molar ratio of vanadate and oxalic acid may be 1:15.

According to the denitration catalyst related to the above-mentioned embodiment, the following effects are exerted.

(1) By using denitration catalyst of claim 1, upon the selective catalytic reduction reaction with ammonia as the reductant, it is possible to exhibit an effect whereby the denitration efficiency is even higher at low temperature, compared to the conventional technology.

(2) As described above, regarding having a defect site at which the oxygen deficiency occurs in the denitration catalyst according to the above embodiment, the ratio (P1/P2) of the peak intensity P2 of wavenumbers 494 to 549 $cm^{-1}$ originating from the originating from the edge-sharing $3V-O_c$ stretching vibration, relative to the peak intensity P1 of wavenumbers 462 to 494 $cm^{-1}$ originating from crosslinked $V-O_B-V$ bending vibration, in the infrared transmission spectrum of the denitration catalyst, is preferably no more than 0.98. For the denitration catalyst according to the above embodiment, the adsorption of NO tends to occur, and can thereby exhibit higher NO conversion rate.

(3) As described above, the denitration catalyst according to the above embodiment is preferably used in denitration at 270°C or less.

In the selective catalytic reduction reaction using the denitration catalyst according to the above embodiment, high denitration effect is brought about without causing the $SO_2$ to oxidize.

(4) As described above, the denitration catalyst according to the above embodiment preferably has an absorption edge wavelength of 575 nm or less.

The denitration catalyst according to the above embodiment can thereby exhibit a NO conversion rate of 61.3% or more under conditions not coexisting with moisture.

(5) As described above, the denitration catalyst according to the above embodiment preferably has a BET specific surface area of 15.3 $m^2$/g or more.

The denitration catalyst according to the above embodiment can thereby exhibit a NO conversion rate of 61.3% or more under conditions not coexisting with moisture.

(6) As described above, the claimed production method of the denitration catalyst includes a step of adding ethylene glycol to a precursor complex synthesized by adding oxalic acid to ammonium vanadate, and firing.

The carbon content of the denitration catalyst according to the above embodiment thereby becomes greater, and the denitration effect in the selective catalytic reduction reaction using the denitration catalyst according to the above embodiment improves.

(7) As described above, in the production method of the denitration catalyst according to the above embodiment, the molar ratio of oxalic acid to ammonium vanadate is preferably at least 2.

The carbon content of the denitration catalyst according to the above embodiment thereby becomes greater, and the denitration effect in the selective catalytic reduction reaction using the denitration catalyst according to the above embodiment improves.

EXAMPLES

Hereinafter, Examples of the present invention will be specifically explained together with Comparative Examples. It should be noted that the present invention is not limited to these Examples.

<1 Each Example and Comparative Example>

[Comparative Example 1]

Ammonium vanadate was dissolved in an oxalic acid solution. Herein, the molar ratio of ammonium vanadate : oxalic acid is 1:3.

After completely dissolving, the moisture in the solution was evaporated on a hot stirrer, and was dried overnight at 120°C in a dryer.

Subsequently, the dried powder was fired for 4 hours at 300°C in air.

The fired vanadium pentoxide was established as the denitration catalyst of Comparative Example 1.

It should be noted the sample name of this denitration catalyst of Comparative Example 1 was set as "Valox3-0".

It should be noted that this Comparative Example 1 is a denitration catalyst disclosed in the above Patent Document 2.

[Example 1]

Ammonium vanadate ($NH_4VO_3$) and oxalic acid were dissolved in pure water.

After completely dissolving, the moisture in the solution was evaporated on a hot stirrer.

After mixing ethylene glycol with an oxalic acid-vanadium complex containing the prepared unreacted oxalic acid in an agate mortar for about 20 minutes, the denitration catalyst of vanadium pentoxide ($V_2O_5$) was obtained by twice firing at a temperature of 300°C the obtained paste-like catalyst precursor by an electric oven.

Herein, the molar ratio of ammonium vanadate:oxalic acid:ethylene glycol is 1:3:1.

The vanadium pentoxide thereby obtained was defined as the denitration catalyst of Example 1.

It should be noted that the sample name of this denitration catalyst of Example 1 was set as "Valox3-EG1".

[Comparative Example 2]

By the same method as Example 1, the denitration catalyst of vanadium pentoxide was obtained by adding triethylene glycol to the precursor complex synthesized by adding oxalic acid to ammonium vanadate, and then firing.

Herein, the molar ratio of ammonium vanadate:oxalic acid:triethylene glycol is 1:3:1.

The vanadium pentoxide thereby obtained was defined as the denitration catalyst of Comparative Example 2.

It should be noted that the sample name of this denitration catalyst of Comparative Example 2 was set as "Valox3-TG1".

[Comparative Example 3]

By the same method as Example 1, the denitration catalyst of vanadium pentoxide was obtained by adding butylene glycol to the precursor complex synthesized by adding oxalic acid to ammonium vanadate, and then firing.
Herein, the molar ratio of ammonium vanadate:oxalic acid:butylene glycol is 1:3:1.
The vanadium pentoxide thereby obtained was defined as the denitration catalyst of Comparative Example 3.
It should be noted that the sample name of this denitration catalyst of Comparative Example 3 was set as "Valox3-BG1".

[Comparative Example 4]

By the same method as Example 1, the denitration catalyst of vanadium pentoxide was obtained by adding propylene glycol to the precursor complex synthesized by adding oxalic acid to ammonium vanadate, and then firing.
Herein, the molar ratio of ammonium vanadate:oxalic acid:propylene glycol is 1:3:1.
The vanadium pentoxide thereby obtained was defined as the denitration catalyst of Comparative Example 4.
It should be noted that the sample name of this denitration catalyst of Comparative Example 4 was set as "Valox3-PG1".

[Comparative Example 5]

The denitration catalyst of vanadium pentoxide was obtained by adding only ethylene glycol to ammonium vanadate, and then firing.
Herein, the molar ratio of ammonium vanadate: ethylene glycol is 1:1.
The vanadium pentoxide thereby obtained was defined as the denitration catalyst of Comparative Example 5.
It should be noted that the sample name of this denitration catalyst of Comparative Example 5 was set as "Va1oxO-EG1".

[Comparative Example 6]

The denitration catalyst of vanadium pentoxide was obtained by firing only ammonium vanadate to make vanadium pentoxide, followed by adding only ethylene glycol, and then firing.
Herein, the molar ratio of ammonium vanadate:ethylene glycol is 1:1.
The vanadium pentoxide thereby obtained was defined as the denitration catalyst of Comparative Example 6.
It should be noted that the sample name of this denitration catalyst of Comparative Example 6 was set as "V1ox0-EG1".

[Example 2]

The denitration catalyst of vanadium pentoxide was obtained by adding ethylene glycol to the precursor complex synthesized by adding oxalic acid to ammonium vanadate, and then firing.
Herein, the molar ratio of ammonium vanadate:oxalic acid:ethylene glycol is 1:2:1.
The vanadium pentoxide thereby obtained was defined as the denitration catalyst of Example 2.
It should be noted that the sample name of this denitration catalyst of Example 2 was set as "Valox2-EG1".

[Comparative Example 7]

The denitration catalyst of vanadium pentoxide was obtained by firing only ammonium vanadate to make vanadium pentoxide, followed by adding oxalic acid and ethylene glycol, and then firing.
Herein, the molar ratio of ammonium vanadate:oxalic acid:ethylene glycol is 1:1:1.
The vanadium pentoxide thereby obtained was defined as the denitration catalyst of Comparative Example 7.
It should be noted that the sample name of this denitration catalyst of Comparative Example 7 was set as "V1ox1-EG1".

[Example 3]

The denitration catalyst of vanadium pentoxide was obtained by adding ethylene glycol to the precursor complex synthesized by adding oxalic acid to ammonium vanadate, and then firing.
Herein, the molar ratio of ammonium vanadate:oxalic acid:ethylene glycol is 1:6:2.
The vanadium pentoxide thereby obtained was defined as the denitration catalyst of Example 3.
It should be noted that the sample name of this denitration catalyst of Example 3 was set as "Valox6-EG2".

[Example 4]

The denitration catalyst of vanadium pentoxide was obtained by adding ethylene glycol to the precursor complex synthesized by adding oxalic acid to ammonium vanadate, and then firing.
Herein, the molar ratio of ammonium vanadate:oxalic acid:ethylene glycol is 1:9:3.
The vanadium pentoxide thereby obtained was defined as the denitration catalyst of Example 4.
It should be noted that the sample name of this denitration catalyst of Example 4 was set as "Valox9-EG3".

[Example 5]

The denitration catalyst of vanadium pentoxide was obtained by adding ethylene glycol to the precursor complex synthesized by adding oxalic acid to ammonium vanadate, and then firing.
Herein, the molar ratio of ammonium vanadate:oxalic acid:ethylene glycol is 1:15:5.
The vanadium pentoxide thereby obtained was defined as the denitration catalyst of Example 5.
It should be noted that the sample name of this denitration catalyst of Example 5 was set as "Valox15-EG5".

[Comparative Example 8]

The denitration catalyst of vanadium pentoxide was obtained by adding ethylene glycol to the precursor complex synthesized by adding oxalic acid to ammonium vanadate, and then firing, and synthesized so that carbon remained in the vanadium pentoxide.
Herein, the molar ratio of ammonium vanadate:oxalic acid:ethylene glycol is 1:1.8:1.
The vanadium pentoxide thereby obtained was defined as the denitration catalyst of Comparative Example 8.
It should be noted that the sample name of this denitration catalyst of Comparative Example 8 was set as "excess carbon".

<2. Evaluation>

<2.1 BET Specific Surface Area>

(Measurement Method)

A Microtrac BEL BELSORP-max was used in the measurement of the BET specific surface area of each catalyst.
After pretreating for 2 hours at 200°C under an Ar atmosphere, it was measured at 196°C.

(Measurement Results)

[Table 1]

| (Table 1) BET specific surface area of vanadium pentoxide catalyst | | |
|---|---|---|
| Sample | | BET specific surface area /$m^2g^{-1}$ |
| Comparative Example 1 | Va1ox3-0 | 41.1 |
| Example 1 | Va1ox3-EG1 | 24.9 |
| Comparative Example 2 | Va1ox3-TG1 | 25.5 |
| Comparative Example 3 | Va1ox3-BG1 | 26.0 |
| Comparative Example 4 | Va1ox3-PG1 | 25.1 |
| Comparative Example 5 | Va1ox0-EG1 | 15.3 |
| Comparative Example 6 | V1ox0-EG1 | 15.2 |
| Example 2 | Va1ox2-EG1 | 26.1 |
| Comparative Example 7 | V1ox1-EG1 | 19.8 |
| Example 3 | Va1ox6-EG2 | 19.2 |
| Example 4 | Va1ox9-EG3 | 26.7 |

(continued)

| (Table 1) BET specific surface area of vanadium pentoxide catalyst | | |
|---|---|---|
| Sample | | BET specific surface area /$m^2g^{-1}$ |
| Example 5 | Va1ox15-EG5 | 29.6 |

Table 1 shows the BET specific surface areas of Examples 1 to 5, and Comparative Examples 1 to 7. Except for Comparative Example 1 disclosed in Patent Document 2, a great difference was not found in the trend of values for BET specific surface area between the Examples and Comparative Examples.
On the other hand, the example having the smallest BET specific surface area in the Examples was the value of 15.2 $m^2$/g of Comparative Example 6, and the example having the largest BET specific surface area other than Comparative Example 1 was the value of 26.0 $m^2$/g of Comparative Example 3.

<2.2 NO Conversion Rate>

(Measurement Method 1)

Under the conditions of Table 2 below, the $NH_3$-SCR reaction was conducted using a fixed bed flow-type reactor at a reaction temperature of 100 to 200°C.
In the gas passing through the catalyst layer, NO was analyzed by a Jasco FT-IR-4700.

[Table 2]

| (Table 2) NH3-SCR measurement conditions | |
|---|---|
| Catalyst amount | 0.375mg |
| Gas flow rate | 250mLmin$^{-1}$ |
| | (NO: 250ppm, $NH_3$: 250ppm, $O_2$: 4vol%) |
| | (2000 ppm NO/Ar 31.3 mL min$^{-1}$) |
| | (2000 ppm $NH_3$/Ar 31.3 mL min$^{-1}$) |
| | ($O_2$ 14 mL min$^{-1}$) |
| | (Ar 177.4 mL min$^{-1}$) |
| Space velocity | 40,000 mLh$^{-1}$g$_{cat}$$^{-1}$ |

In addition, the NO conversion rate was calculated by Formula (1) noted below.
It should be noted that $NO_{in}$ is the NO concentration at the reaction tube inlet, and $NO_{out}$ is the NO concentration of the reaction tube outlet.
Formula 1

$$\text{NO conversion rate } [\%] = \frac{NO_{in} - NO_{out}}{NO_{in}} \times 100 \quad (\text{Formula 1})$$

(Measurement Results 1)

Table 3 shows the NO conversion rates of each vanadium pentoxide catalyst for both a case of moisture not coexisting and the case of coexisting with moisture.

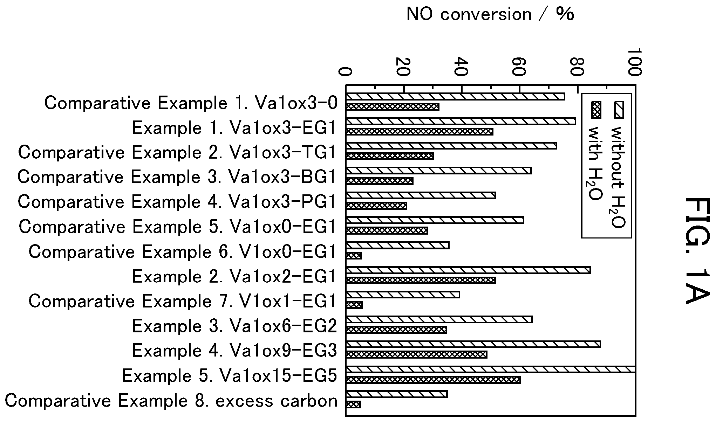

FIG. 1A is a plot graphing this Table 3.

[Table 3]

| (Table 3) NO conversation rate of vanadium pentoxide catalyst | | | |
|---|---|---|---|
| | | No conversion rate / % | |
| Sample | | Without $H_2O$ | With $H_2O$ |
| Comparative Example 1 | Va1ox3-0 | 75.5 | 32.0 |

(continued)

| (Table 3) NO conversation rate of vanadium pentoxide catalyst | | | |
|---|---|---|---|
| | | No conversion rate / % | |
| Sample | | Without $H_2O$ | With $H_2O$ |
| Example 1 | Va1ox3-EG1 | 79.5 | 50.6 |
| Comparative Example 2 | Va1ox3-TG1 | 72.7 | 30.2 |
| Comparative Example 3 | Va1ox3-BG1 | 63.9 | 23.1 |
| Comparative Example 4 | Va1ox3-PG1 | 51.6 | 20.9 |
| Comparative Example 5 | Va1ox0-EG1 | 61.3 | 28.1 |
| Comparative Example 6 | V1ox0-EG1 | 35.5 | 5.2 |
| Example 2 | Va1ox2-EG1 | 84.3 | 51.5 |
| Comparative Example 7 | V1ox1-EG1 | 39.2 | 5.6 |
| Example 3 | Va1ox6-EG2 | 64.2 | 34.7 |
| Example 4 | Va1ox9-EG3 | 87.8 | 48.6 |
| Example 5 | Va1ox15-EG5 | 100 | 60.1 |
| Comparative Example 8 | excess carbon | 34.9 | 4.9 |

For both the case of moisture not coexisting and the case of coexisting with moisture, the denitration catalysts of Examples generally showed a higher NO conversion rate than the denitration catalysts of the Comparative Examples. Above all, the denitration catalyst made by adding ethylene glycol as a precursor to ammonium vanadate and firing showed a high NO conversion rate.
Most importantly, Example 5 (Va1ox15-EG5) showed the highest NO conversion rate.

(Measurement Method 2)

Under the conditions of Table 2 above, the $NH_3$-SCR reaction was conducted by the same method as measurement method 1, at a plurality of reaction temperatures between 40°C and 300°C using the catalyst of Example 1 (Va1ox3-EG1).

(Measurement Results 2)

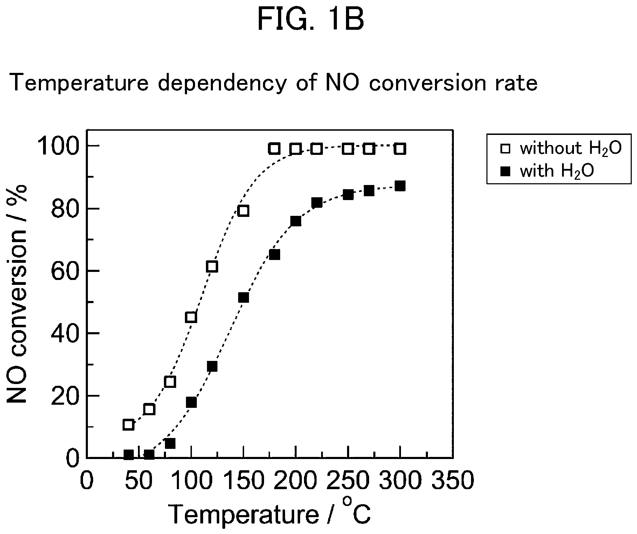

FIG. 1B shows the change in NO conversion rates of both the case of moisture not coexisting and the case of coexisting with moisture, accompanying a change in reaction temperature of Example 1 (Va1ox3-EG1).
As is evident from the graph of FIG. 1B, although the NO conversion rate decreases when the reaction temperature drops below 200°C, for example, the NO conversion rate in the case of moisture not coexisting exhibits about 25% at the reaction temperature of approximately 80°C.
It was thereby shown that denitration catalyst according to the Examples of the present invention are useful to an extent in denitration at approximately 80°C.

<2.3 Reaction Rate>

The reaction rate of NO was calculated by applying the NO conversion rates listed in Table 3, specific surface area of each catalyst listed in Table 1, etc. to Formula (2) below.

Reaction rate $[mol_{No}m_{cat}^{-1}s^{-1}]$ = conversion rate [%] x NO concentration (250 ppm) x flowrate (250 mL/min)/60/22400 [mL/mol]/catalyst amount (0.375 g)/specific surface area $[m^2/g]$ of each catalyst     Formula (2)

It should be noted that, in Formula (2), "60" is the numerical value for converting minutes into seconds.

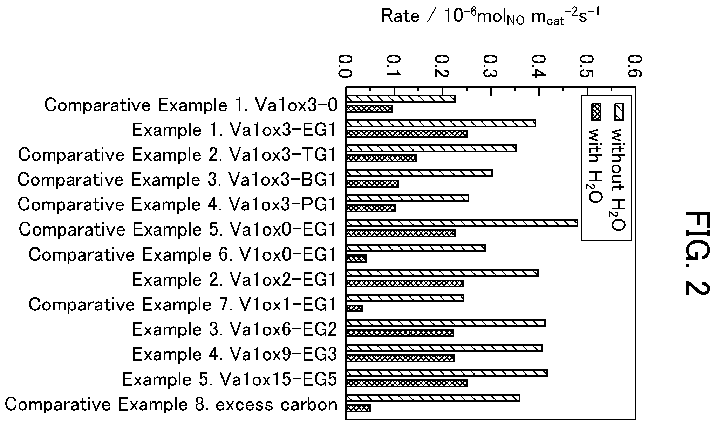

FIG. 2 is a graph showing the reaction rates of each catalyst for both the case of moisture not coexisting and the case of coexisting with moisture.
In both the case of moisture not coexisting and the case of coexisting with moisture, the denitration catalysts of the Examples generally showed higher conversion rates than the denitration catalysts of the Comparative Examples. Above all, the denitration catalyst made by adding ethylene glycol to ammonium vanadate as a precursor, and then firing showed a high NO conversion rate.

Since the reaction rates per specific surface area of these catalysts are roughly close values, the precursor amount is assumed to contribute to variation in the specific surface area.

In addition, the reaction rates per specific surface area (activity) became values all higher than the Comparative Example 1, including for both the Examples and Comparative Examples.

<2.4 Carbon Content>

(Measurement Method)

Upon measurement of the carbon content of each vanadium pentoxide catalyst, the carbon content was quantified by elemental analysis of C (carbon), H (hydrogen) and N (nitrogen).

In more detail, in the reaction tube at high temperature inside of a CE-440F made by Exeter Analytical Inc., each denitration catalyst was completely combusted and decomposed to convert the C, H and N which are the main constituent elements into $CO_2$, $H_2O$ and $N_2$, followed by sequentially quantifying these three components in three thermal conductivity detectors to measure the contents of C, H and N in the constituent elements.

(Measurement Results)

Table 4 shows the carbon content of each vanadium pentoxide catalyst.

[Table 4]

| (Table 4) Carbon content of vanadium pentoxide | | |
|---|---|---|
| Sample | | Carbon content / wt% |
| Comparative Example 1 | Va1ox3-0 | 0.025 |
| Example 1 | Va1ox3-EG1 | 0.17 |
| Comparative Example 2 | Va1ox3-TG1 | 0.16 |
| Comparative Example 3 | Va1ox3-BG1 | 0.07 |
| Comparative Example 4 | Va1ox3-PG1 | 0.11 |
| Comparative Example 5 | Va1ox0-EG1 | 0.14 |
| Comparative Example 6 | V1ox0-EG1 | 0.01 |
| Example 2 | Va1ox2-EG1 | 0.07 |
| Comparative Example 7 | V1ox1-EG1 | 0.04 |
| Example 3 | Va1ox6-EG2 | 0.12 |
| Example 4 | Va1ox9-EG3 | 0.17 |
| Example 5 | Va1ox15-EG5 | 0.16 |
| Comparative Example 8 | excess carbon | 3.21 |

According to the numerical values of Table 4, the carbon content included in the vanadium pentoxide catalysts of the Examples can be quantified as being at least 0.05 wt%.

(Relationship between Carbon Content and Reaction Activity)

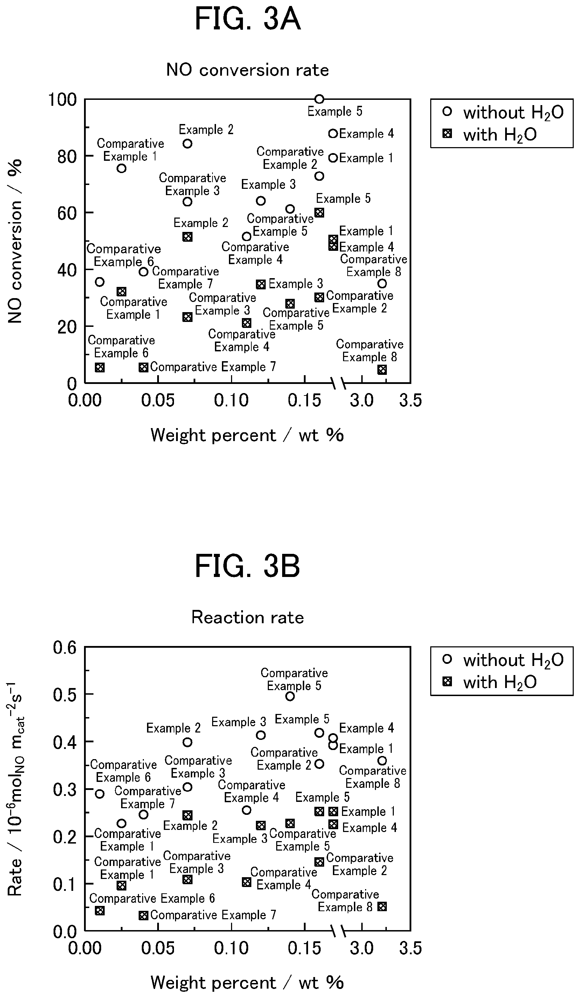

FIG. 3A is a graph plotting the carbon content of each catalyst listed in Table 4 on the horizontal axis and plotting the NO conversion rate of each catalyst listed in FIG. 1 on the vertical axis.

For Example 1 (Valox3-EG1)), Example 4 (Va1ox9-EG3) and Example 5 (Valox15-EG5) having a higher NO conversion rate than Comparative Example 1 (Va1ox3-0), it was shown that the carbon content exceeds 0.05 wt%.

FIG. 3B is a graph plotting the carbon content of each catalyst listed in Table 4 on the horizontal axis and plotting the reaction rate per specific surface area of each catalyst listed in FIG. 2 on the vertical axis.

Above all, in the case of moisture not coexisting, it was shown that the reaction rate per specific surface area became generally higher than Comparative Example 1 (Va1ox3-0) irrespective of the carbon content.

<2.5 Ultraviolet and Visible Absorption Spectrum>

(Measurement Method)

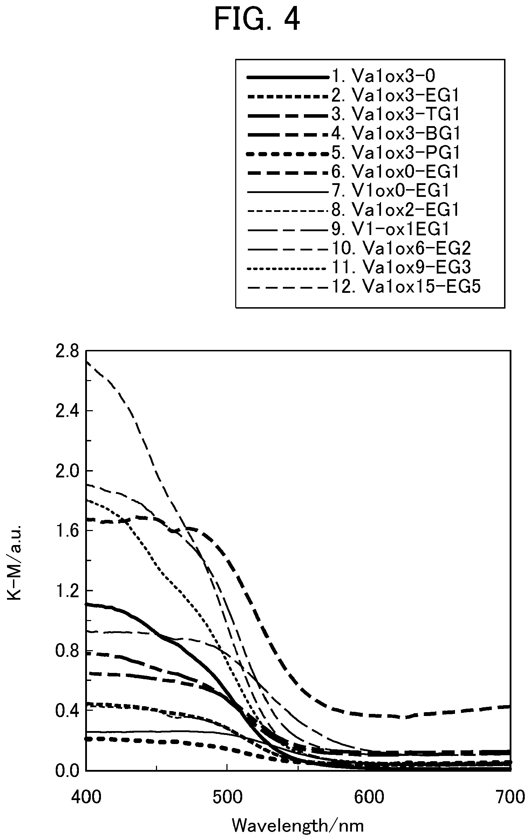

The ultraviolet and visible absorption spectrum of each vanadium pentoxide catalyst was measured. FIG. 4 shows the spectral curve of each catalyst obtained as a result of measurement.

Furthermore, in FIG. 4, a tangent line is drawn from the inflection point of each spectral curve, and the absorption edge wavelength was calculated by obtaining the intersection with the horizontal axis.

In more detail, a sample of each vanadium pentoxide catalyst was filled into a sample holder including a white sheet of barium sulfate, and each ultraviolet and visible absorption spectrum was measured by the diffuse reflectance method. As the measuring apparatus, a UV-3100PC UV-visible spectrophotometer manufactured by Shimadzu was used.

(Measurement Results)

Table 5 shows the absorption edge wavelength of each vanadium pentoxide catalyst.

[Table 5]

| (Table 5) Absorption edge wavelength of each vanadium pentoxide catalyst | | |
|---|---|---|
| Sample | | Absorption edge wavelength / nm |
| Comparative Example 1 | Va1ox3-0 | 537.4 |
| Example 1 | Va1ox3-EG1 | 547.7 |
| Comparative Example 2 | Va1ox3-TG1 | 551.8 |
| Comparative Example 3 | Va1ox3-BG1 | 560.9 |
| Comparative Example 4 | Va1ox3-PG1 | 561.0 |
| Comparative Example 5 | Va1ox0-EG1 | 567.4 |
| Comparative Example 6 | V1ox0-EG1 | 587.3 |
| Example 2 | Va1ox2-EG1 | 548.2 |
| Comparative Example 7 | V1ox1-EG1 | 580.1 |
| Example 3 | Va1ox6-EG2 | 545.2 |
| Example 4 | Va1ox9-EG3 | 535.9 |
| Example 5 | Va1ox15-EG5 | 534.5 |

According to Table 5, since the value of the absorption edge wavelength differed according to each vanadium pentoxide, it is assumed that the electronic structure differs according to the catalyst.

On the other hand, the highest absorption edge wavelength in the Comparative Examples is the 587.3 nm of Comparative Example 6 (V1ox0-EG1).

(Relationship between Absorption Edge Wavelength and Reaction Activity)

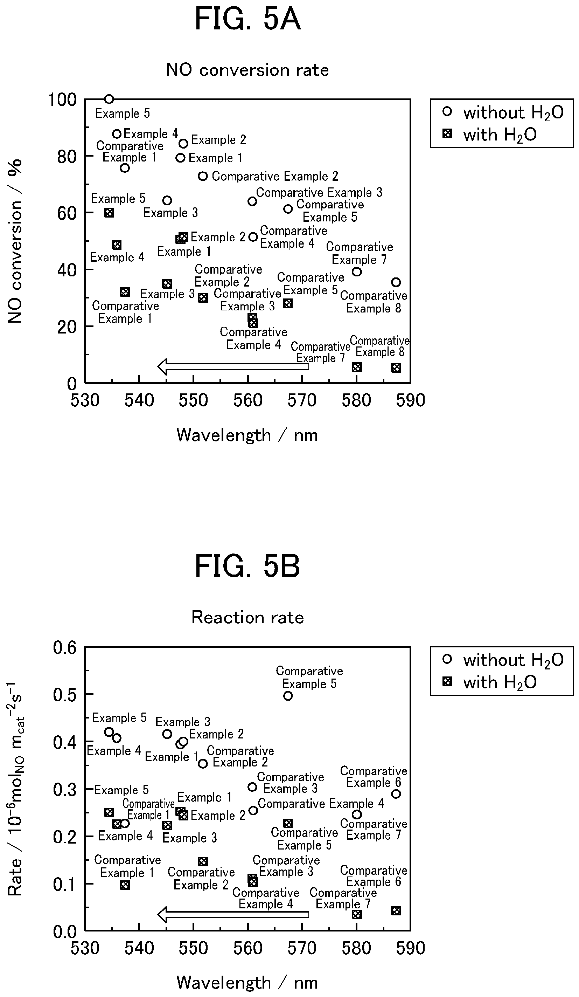

FIG. 5A is a graph plotting the absorption edge wavelength of each catalyst listed in Table 5 on the horizontal axis, and plotting the NO conversion rate of each catalyst listed in FIG. 1 on the vertical axis.

A trend was shown in which the NO conversion rate rises accompanying the absorption edge wavelength blue shifting, i.e. accompanying the crystal state collapsing.

FIG. 5B is a graph plotting the absorption edge wavelength of each catalyst listed in Table 5 on the horizontal axis, and plotting the reaction rate per specific surface area of each catalyst listed in FIG. 2 on the vertical axis.

A trend was shown in which the reaction rate per specific surface area rises accompanying the absorption edge wavelength blue shifting, i.e. accompanying the crystal state collapsing.

(Relationship between Absorption Edge Wavelength and BET Specific Surface Area)

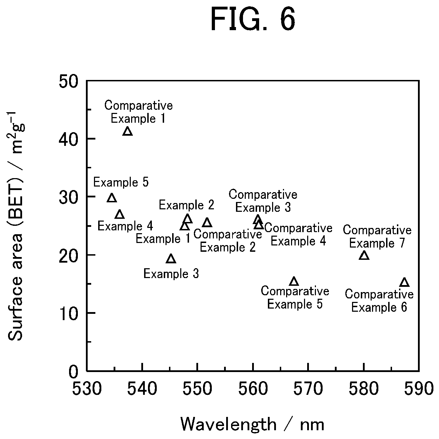

FIG. 6 is a graph plotting the absorption edge wavelength of each catalyst listed in Table 5 on the horizontal axis, and plotting the BET specific surface area of each catalyst listed in Table 1 on the vertical axis.
Excluding Comparative Example 1 (Va1ox3-0), a great difference was not found in the BET specific surface areas, even when the absorption edge wavelength changed.

<2.6 Infrared Absorption Spectrum>

(Measurement Method)

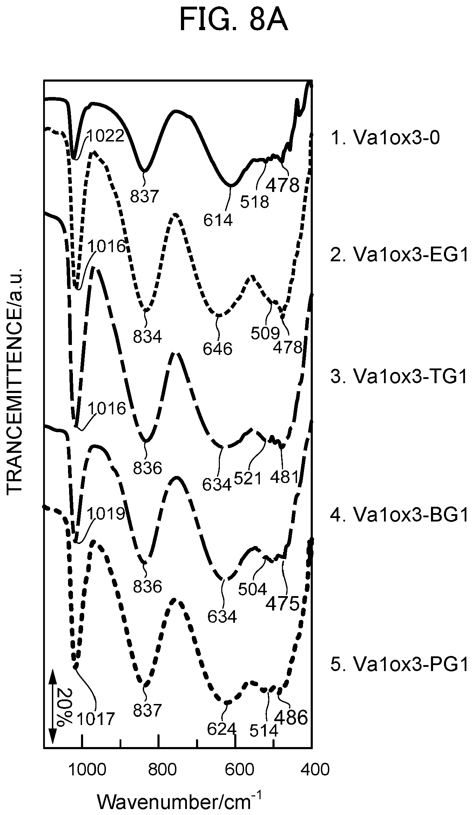

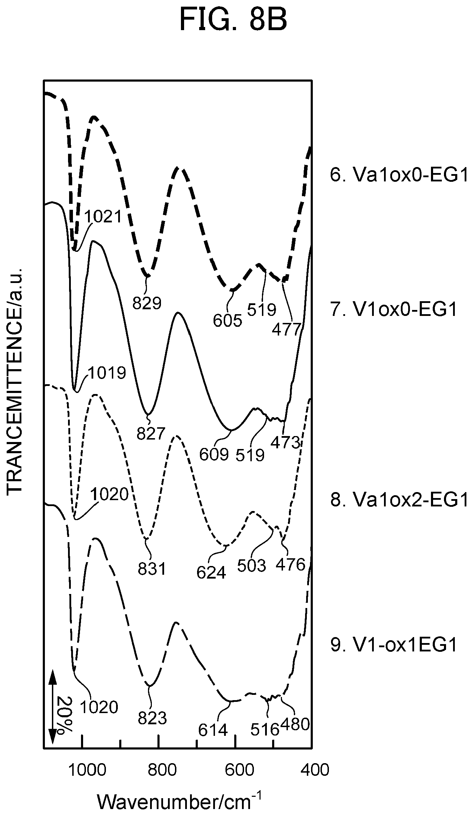

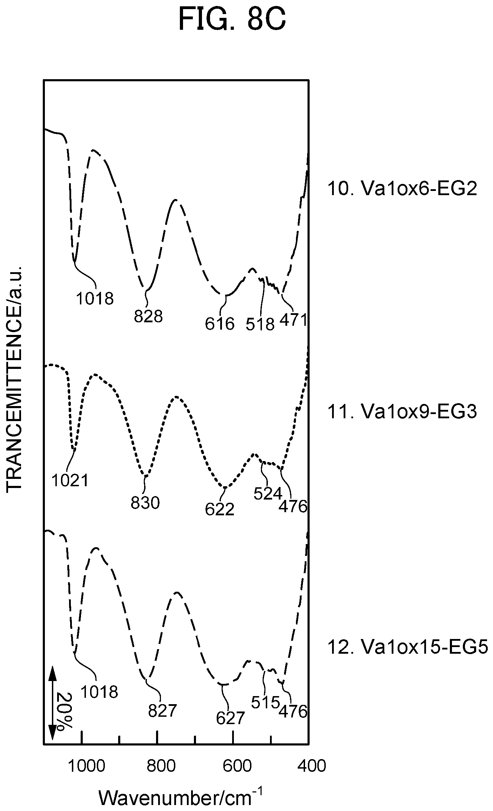

The infrared absorption spectrum of each vanadium pentoxide catalyst was measured.

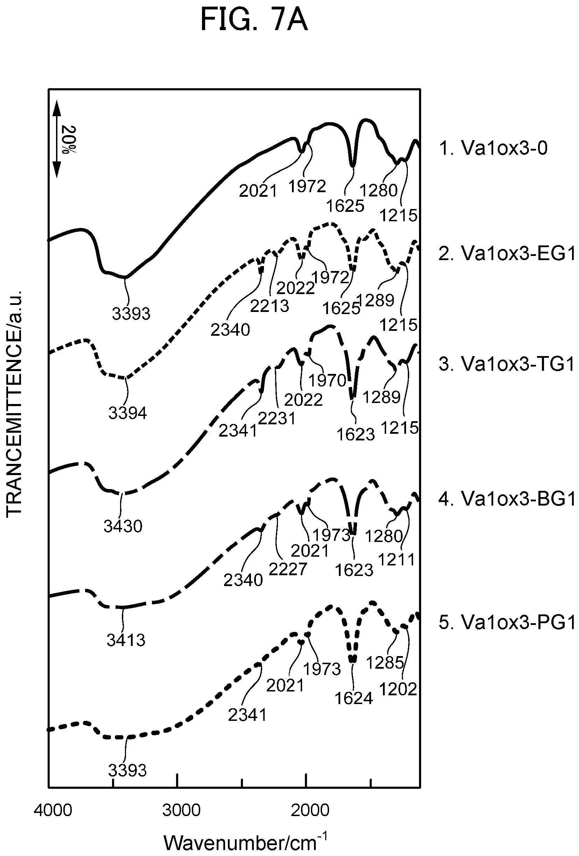

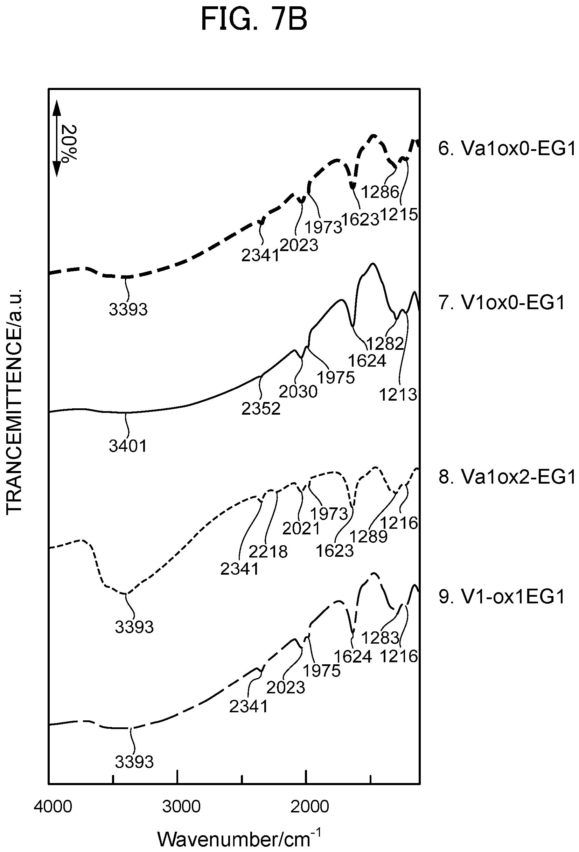

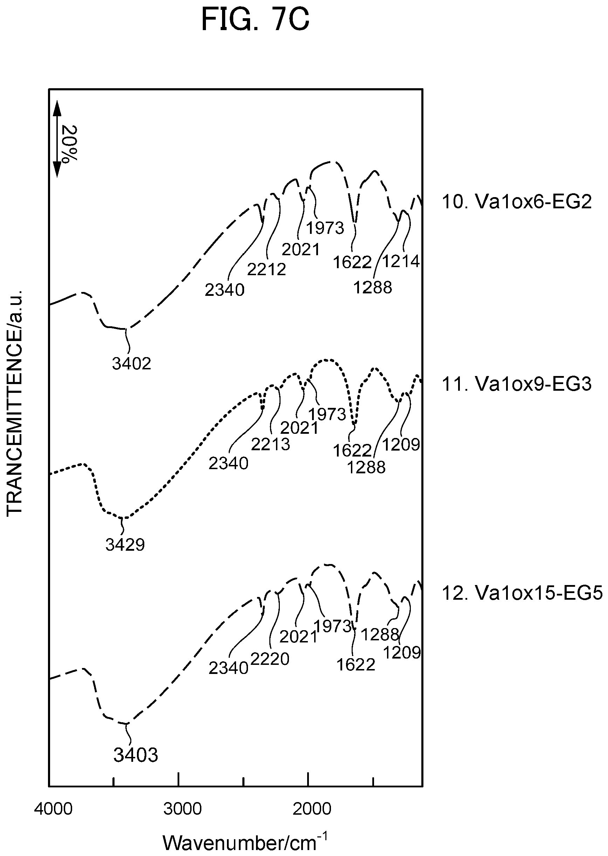

FIGS. 7A to 7C show the spectral curves of each catalyst obtained as a result of measuring the infrared absorption spectrum in the high wavenumber region (functional group region: 1150 - 4000 $cm^{-1}$).
In addition, FIGS. 8A to 8C show the spectral curves of each catalyst obtained as a result of measuring the infrared absorption spectrum in the low wavenumber region (finger print region: 1150 - 400 $cm^{-1}$).
It should be noted that, upon measurement, a 1-mg sample of each vanadium pentoxide catalyst and 10 mg of potassium bromide were mixed, and then molded by pressurizing in a tablet molding machine.
Furthermore, the infrared absorption spectrum was measured by the transmission method using a TGS detector.
As the measurement apparatus, an FT/IR-6100 infrared spectrometer manufactured by JASCO Corporation was used.

(Measurement Results)

As shown in FIGS. 7A to 7C, for catalyst made by converting glycol in the course of manufacturing vanadium pentoxide catalyst, peaks occur in the high wavenumber region, in the region shown by arrows, especially peaks of 2340 $cm^{-1}$ and 2220 $cm^{-1}$ appear with a catalyst of high NO conversion rate. These peaks are assumed to be CO and $CO_2$ absorbed in the defect site.

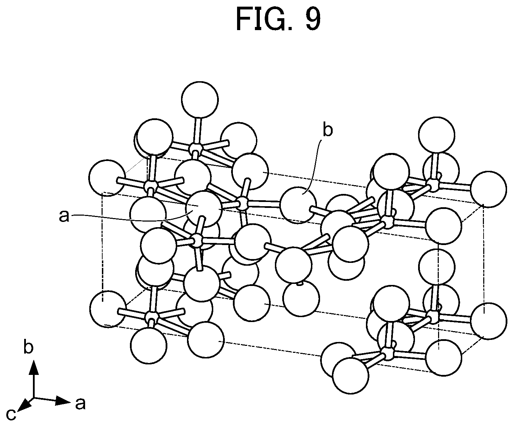

FIG. 9 shows the crystal structure of vanadium pentoxide. In the crystal structure of vanadium pentoxide, edge-sharing 3V-Oc ((a) in FIG. 9) and crosslinked V-$O_B$-V ((b) in FIG. 9) exist.
In the crystal structure, when the edge-sharing 3V-Oc is scarce and crosslinked V-$O_B$-V is abundant, the absorption of NO tends to occur, and activity increases.
As shown in FIGS. 8A to 8C, in the infrared absorption spectra in the low wavenumber region, the ratio (P1/P2) of the peak intensity P2 of the wavenumber 494 to 549 $cm^{-1}$ originating from the edge-sharing 3V-$O_c$ stretching vibration relative to the peak intensity P1 of the wavenumber 462 to 494 $cm^{-1}$ originating from crosslinked V-$O_B$-V bending vibration changes according to the catalyst.
From this matter, it is suggested to reflect the difference in structure of vanadium oxide for every catalyst.
Above all, this "P1/P2" corresponds to how much defect site at which the oxygen deficiency occurs is generating.
The infrared absorption spectra of FIGS. 8A to 8C were normalized, and the ratio of the transmittance of edge-sharing 3V-$O_c$ relative to the transmittance of crosslinked V-$O_B$-V was calculated as the ratio of the peak intensity P2 relative to the peak intensity P1.

[Table 6]

| (Table 6) Ratio of peak intensity | | | | | | |
|---|---|---|---|---|---|---|
| | | P1 | | P2 | | P1/P2 |
| Sample | | Wavenumber | Transmittance /% | Wavenumber | Transmittance /% | |
| Comparative Example 1 | Valox3-0 | 518.0 | 48.40 | 478.0 | 48.25 | 0.997 |
| Example 1 | Valox3-EG1 | 509.0 | 45.79 | 478.0 | 40.33 | 0.881 |
| Comparative Example 2 | Valox3-TG1 | 521.0 | 46.71 | 481.0 | 44.74 | 0.958 |
| Comparative Example 3 | Valox3-BG1 | 504.0 | 41.55 | 475.0 | 42.14 | 1.014 |

(continued)

| (Table 6) Ratio of peak intensity | | | | | | |
|---|---|---|---|---|---|---|
| | | P1 | | P2 | | P1/P2 |
| Sample | | Wavenumber | Transmittance /% | Wavenumber | Transmittance /% | |
| Comparative Example 4 | Valox3-PG1 | 514.0 | 42.05 | 486.0 | 41.58 | 0.989 |
| Comparative Example 5 | Valox0-EG1 | 519.0 | 42.89 | 477.0 | 38.57 | 0.899 |
| Comparative Example 6 | V1ox0-EG1 | 508.2 | 41.49 | 471.5 | 41.11 | 0.991 |
| Example 2 | Valox2-EG1 | 503.0 | 45.01 | 476.0 | 40.55 | 0.901 |
| Comparative Example 7 | V1ox1-EG1 | 516.0 | 39.79 | 480.0 | 40.94 | 1.029 |
| Example 3 | Valox6-EG2 | 518.0 | 41.79 | 471.0 | 37.11 | 0.888 |
| Example 4 | Valox9-EG3 | 524.0 | 43.55 | 476.0 | 39.30 | 0.902 |
| Example 5 | Valox15-EG5 | 515.0 | 42.90 | 471.0 | 37.34 | 0.870 |

Table 6 shows the above transmittance ratios of Examples 1 to 5 and Comparative Examples 1 to 7.

The value of transmittance shown in Table 6 becomes smaller as the peaks in FIGS. 8A to 8C become convex downwardly. For example, the transmittance of this peak becomes smaller as the peak on the low wavenumber side P1 (462 to 494 $cm^{-1}$) returned to the crosslinked V-$O_E$-V bulges out downwardly. According to Table 6, the ratio (P1/P2) of the peak intensity P2 relative to the peak intensity P1 of the Examples of the present invention can be quantified as 0.98 or less.

(Relationship between Infrared Absorption Spectrum and Catalyst Activity)

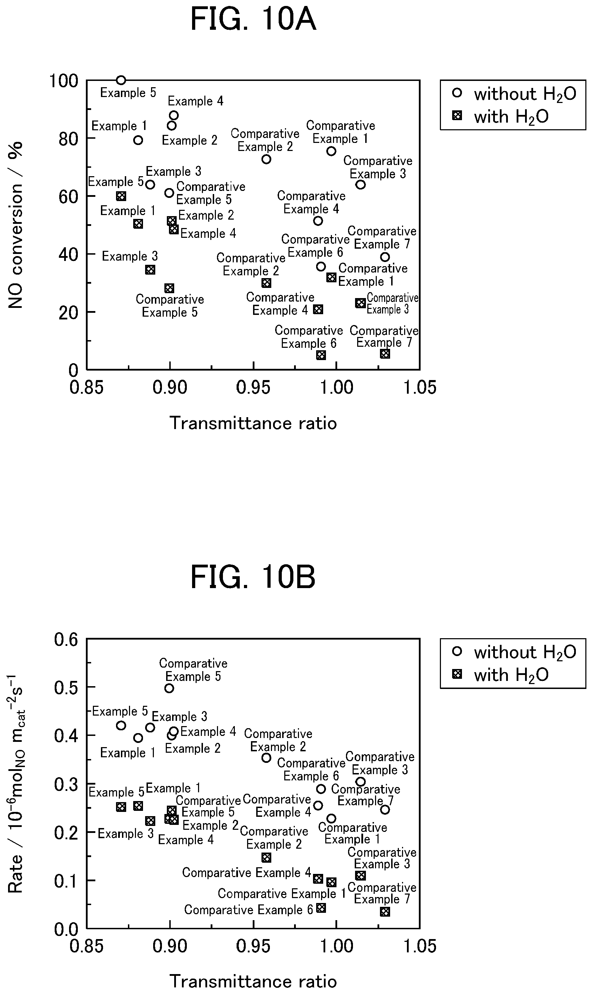

FIG. 10A is a graph plotting the ratio of this transmittance on the horizontal axis, and plotting the NO conversion rate of each catalyst listed in FIG. 1 on the vertical axis.

It is shown that the NO conversion rate rises together with a decrease in the ratio of transmittance.

From this fact, it is suggested that the activity improves as the proportion of edge-sharing 3V-$O_c$ becomes smaller.

FIG. 10B is a graph plotting the above-mentioned transmittance on the horizontal axis, and plotting the reaction rate per specific surface area of each catalyst listed in FIG. 2 on the vertical axis.

It is shown that the reaction rate per specific surface area rises together with a decrease in transmittance ratio.

From this fact as well, it is suggested that the activity improves as the proportion of edge-sharing 3V-$O_c$ becomes smaller.

According to both graphs, the transmittance ratio of the Examples of the present invention can be quantified as 0.98 or less.

It should be noted that the above-mentioned transmittance ratio serves as an index of defect sites.

<2.7 TEM Images>

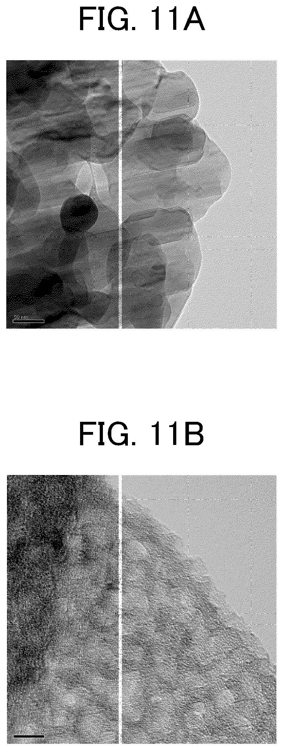

FIGS. 11A and 11B show TEM images of Comparative Example 1 (Va1ox3-0).

It should be noted that FIG. 11A is a TEM image of 140,000 times magnification, and FIG. 11B is a TEM image of 1,400,000 times magnification.

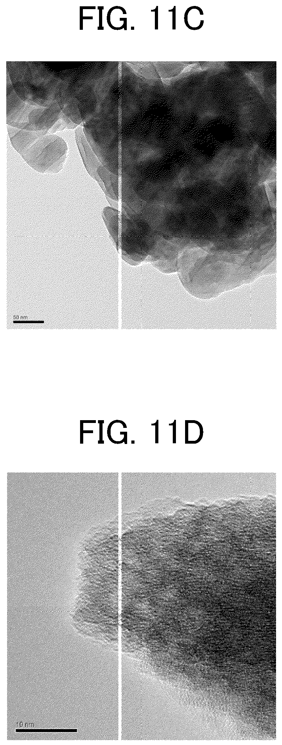

On the other hand, FIGS. 11C and 11D show TEM images of Example 1 (Valox3-EG1).

It should be noted that FIG. 11C is a TEM image of 140,000 times magnification, and FIG. 11D is a TEM image of 1,400,000 times magnification.

As found from these images, there is no change in the morphology from the presence/absence of addition of ethylene glycol.

<2.8 X-ray Photoelectron Spectrum (XPS) Measurement>

(Measurement Method)

For Comparative Example 1 (Va1ox3-0), Example 1 (Va1ox3-EG1), Comparative Example 2 (Valox3-TG1), Comparative Example 3 (Valox3-BG1), and Comparative Example 4 (Va1ox3-PG1), the X-ray photoelectron spectrum (XPS) was measured in order to analyze the electronic state.
In more detail, powder samples of each catalyst of the Examples and Comparative Examples were fixed to a sample holder using carbon tape, and the X-ray photoelectron spectrum was measured.
As the measurement device, a JPS-9010MX photoelectron spectrometer manufactured by JEOL Ltd. was used.

(Measurement Results)

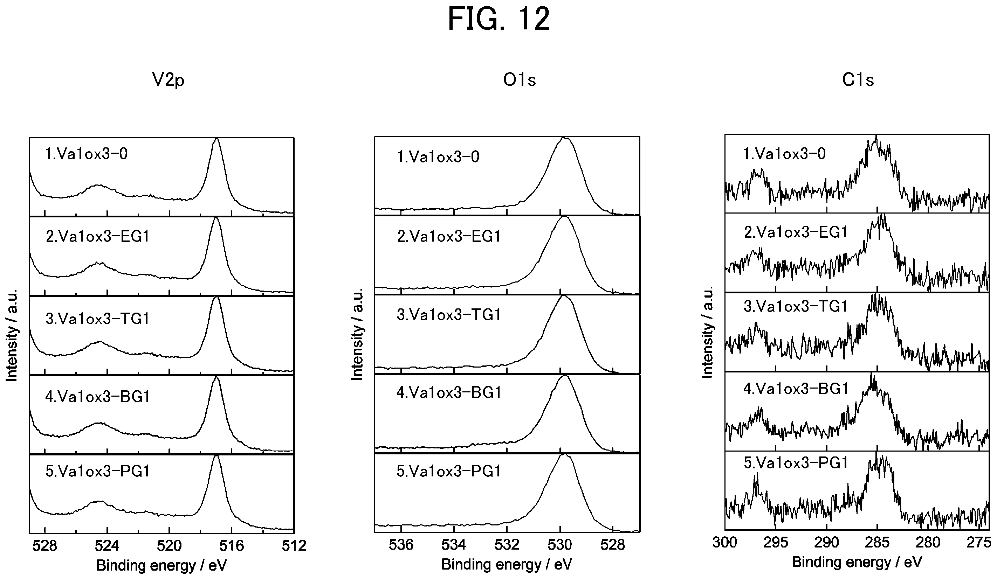

FIG. 12 shows the XPS spectra of the V2p, O1s and C1s regions.
A clear change in electronic state for every catalyst was not confirmed.

<2.9 Water Adsorption Amount>

(Measurement Method)

Adsorption isotherms were obtained for Examples 1 to 5 and Comparative Examples 1 to 7.
In other words, the equilibrium adsorption amount of water adsorbed to each catalyst under constant temperature was measured while changing the relative pressure.
More specifically, powder of the catalyst of each Example and each Comparative Example was encapsulated in a sample holder, and measurement was performed using a Belsorp-maxk manufactured by BELCAT.
It should be noted that, herein, "relative pressure" indicates a ratio of the adsorption equilibrium pressure relative to the saturated vapor pressure, and is a value of 0 to 1.

(Measurement Method)

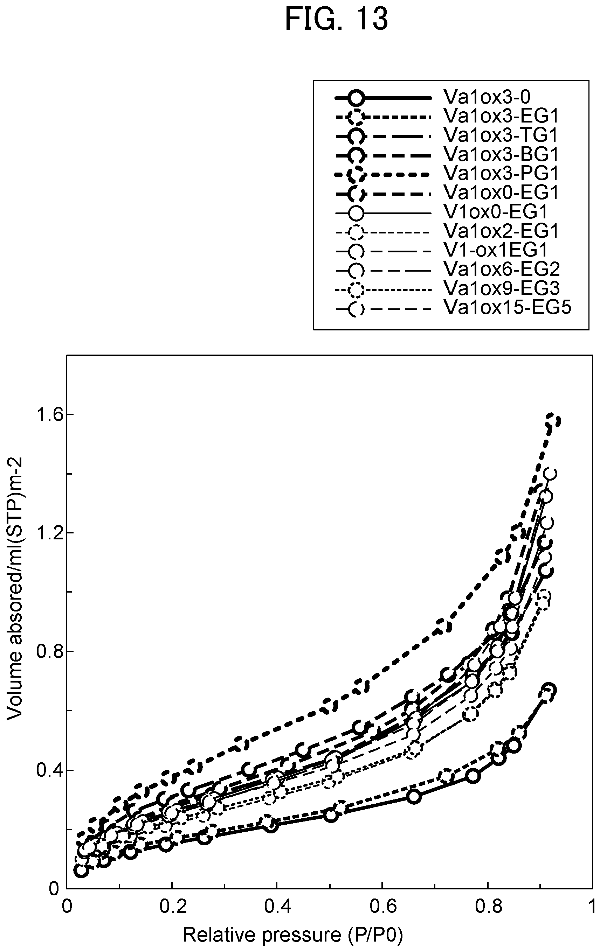

FIG. 13 shows the adsorption isotherm of water of each catalyst.

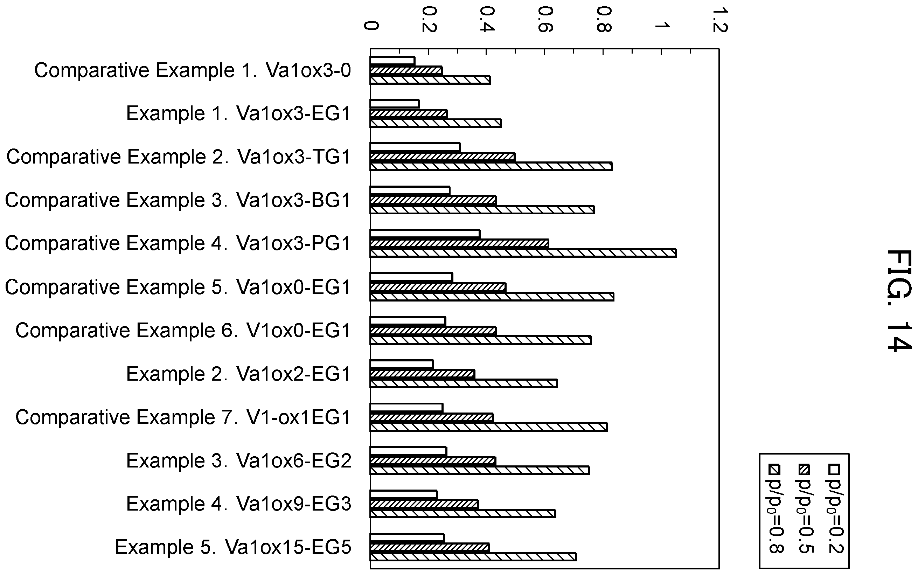

FIG. 14 shows the adsorption amount of water of each catalyst for the respective absolute pressures $p/p_0$ of 0.2, 0.5 and 0.8.
In both FIGS. 13 and 14, the correlation between the adsorption amount of water and the synthesis method was not shown.

(Relationship between Water Adsorption Amount and Catalyst Activity)

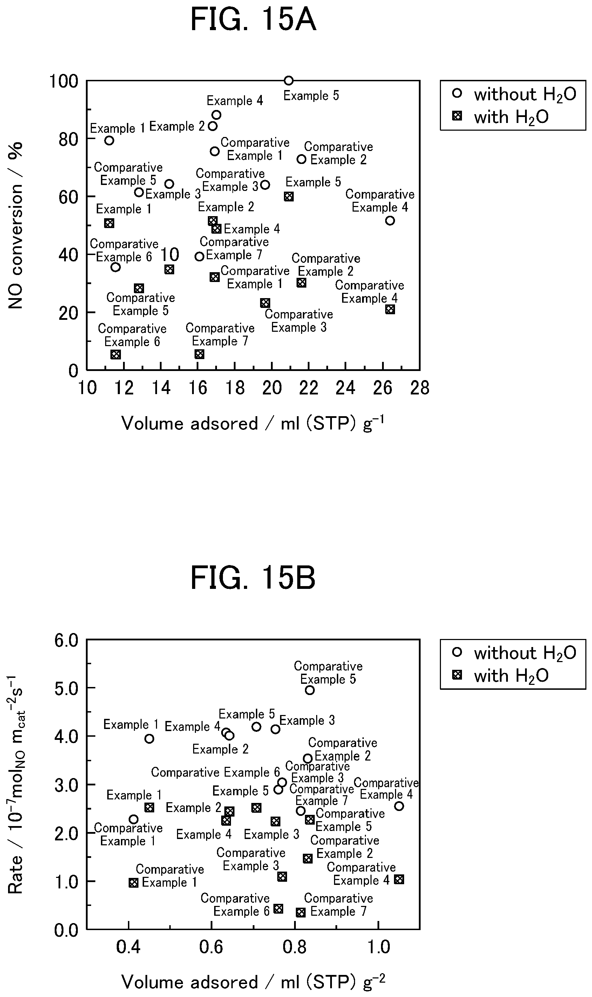

FIG. 15A is a graph plotting the water adsorption amount of each catalyst for absolute pressure $p/p_0 = 0.8$ on the horizontal axis, and plotting the NO conversion rate of each catalyst listed in FIG. 1 on the vertical axis.
A correlation between the water adsorption amount and NO conversion rate was not found.
FIG. 15B is a graph plotting the water adsorption amount of each catalyst for absolute pressure $p/p_0 = 0.8$ on the horizontal axis, and plotting the reaction rate per specific surface area of each catalyst listed in FIG. 2 on the vertical axis.
A correlation between the water adsorption amount and reaction rate per specific surface area was not found.

<2.10 Raman Spectra>

(Measurement Method)

In order to analyze the crystal structure of each vanadium pentoxide catalyst, the Raman spectra was measured by Raman spectroscopy.

(Measurement Results)

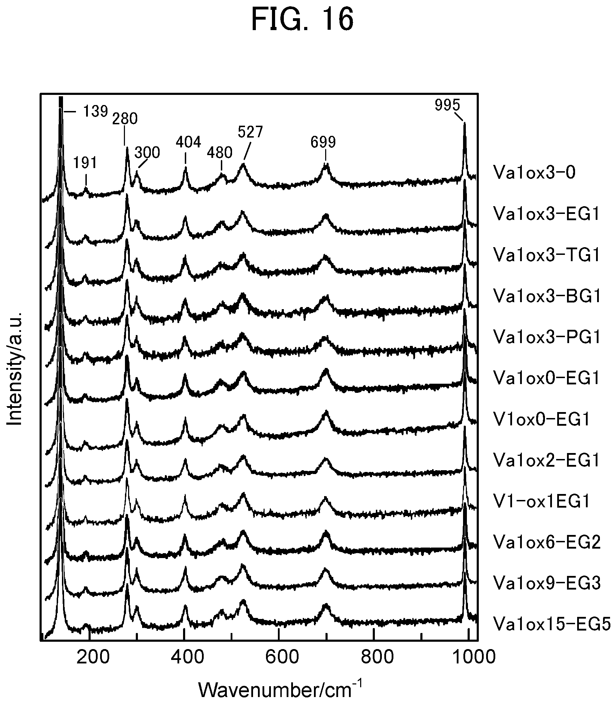

FIG. 16 shows the Raman spectra of each catalyst.
From FIG. 16, the peaks originating from the crystal structure of each catalyst could be confirmed.
On the other hand, the peak originating from the defect mode, etc. did not appear.
In the above way, for a denitration catalyst containing at least 43 wt% vanadium oxide by vanadium pentoxide conversion, and having a carbon content of at least 0.05 wt%, the denitration efficiency at a low temperature of 270°C or lower is high in the selective catalytic reduction reaction with ammonia as the reductant, using the denitration catalyst of the present invention having a defect site at which the oxygen deficiency occurs in the crystal structure.

## Claims

1. A denitration catalyst comprising vanadium oxide, having a carbon content of at least 0.05 wt%, and having a defect site at which an oxygen deficiency occurs in the crystal structure; wherein the denitration catalyst is formed by a method comprising a step of adding ethylene glycol to a precursor complex synthesized by mixing ammonium vanadate and oxalic acid, and then firing.

2. The denitration catalyst according to claim 1, wherein the denitration catalyst has an absorption edge wavelength of 575 nm or less.

3. The denitration catalyst according to claim 1 or claim 2, wherein the denitration catalyst has a BET specific surface area of 15.3 $m^2$/g or more.

4. A production method for the denitration catalyst according to any one of claims 1 to 3, the method comprising a step of adding ethylene glycol to a precursor complex synthesized by mixing ammonium vanadate and oxalic acid, and then firing.

5. The production method according to claim 4 or the denitrification catalyst of any of claims 1 to 3, wherein a molar ratio of the oxalic acid to the ammonium vanadate is at least 2.

6. The production method according to claim 4 or the denitrification catalyst of any of claims 1 to 3, wherein the molar ratio of vanadate and oxalic acid is 1:2 to 1:3.

7. The production method according to claim 4 or the denitrification catalyst of any of claims 1 to 3, wherein the molar ratio of vanadate and oxalic acid is 1:9 to 1:15.

## Patentansprüche

1. Denitrierungskatalysator, umfassend Vanadiumoxid mit einem Kohlenstoffgehalt von mindestens 0,05 Gew.-% und mit einer Defektstelle, an der ein Sauerstoffmangel in der Kristallstruktur auftritt; wobei der Denitrierungskatalysator durch ein Verfahren gebildet wird, das einen Schritt des Hinzufügens von Ethylenglykol zu einem Vorläuferkomplex, der durch Mischen von Ammoniumvanadat und Oxalsäure synthetisiert wird, und anschließendes Ausheizen umfasst.

2. Denitrierungskatalysator nach Anspruch 1, wobei der Denitrierungskatalysator eine Absorptionskantenwellenlänge von 575 nm oder weniger aufweist.

3. Denitrierungskatalysator nach Anspruch 1 oder Anspruch 2, wobei der Denitrierungskatalysator eine BET-spezifische Oberfläche von 15,3 $m^2$/g oder mehr hat.

4. Herstellungsverfahren für den Denitrierungskatalysator nach einem der Ansprüche 1 bis 3, wobei das Verfahren einen Schritt des Hinzufügens von Ethylenglykol zu einem Vorläuferkomplex, der durch Mischen von Ammoniumvanadat und Oxalsäure synthetisiert wird, und anschließendes Ausheizen umfasst.

5. Herstellungsverfahren nach Anspruch 4 oder Denitrierungskatalysator nach einem der Ansprüche 1 bis 3, wobei ein Molverhältnis von Oxalsäure zu Ammoniumvanadat mindestens 2 beträgt.

6. Herstellungsverfahren nach Anspruch 4 oder Denitrierungskatalysator nach einem der Ansprüche 1 bis 3, wobei das Molverhältnis von Vanadat zu Oxalsäure 1:2 bis 1:3 beträgt.

7. Herstellungsverfahren nach Anspruch 4 oder Denitrierungskatalysator nach einem der Ansprüche 1 bis 3, wobei das Molverhältnis von Vanadat zu Oxalsäure 1:9 bis 1:15 beträgt.

**Revendications**

1. Catalyseur de dénitration comprenant de l'oxyde de vanadium ayant une teneur en carbone d'au moins 0,05 % en poids et présentant un site défectueux où il y a un manque d'oxygène dans la structure cristalline ; le catalyseur de dénitration étant formé par un procédé comprend une étape consistant à ajouter de l'éthylène glycol à un complexe précurseur synthétisé en mélangeant du vanadate d'ammonium et de l'acide oxalique, puis à calciner.

2. Le catalyseur de dénitration selon la revendication 1, sachant que le catalyseur de dénitration a une longueur d'onde d'absorption maximale de 575 nm ou moins.

3. Le catalyseur de dénitration selon la revendication 1 ou la revendication 2, sachant que le catalyseur de dénitration a une surface spécifique BET de 15,3 $m^2/g$ ou plus.

4. Procédé de fabrication du catalyseur de dénitration selon l'une quelconque des revendications 1 à 3, sachant que le procédé comprend une étape consistant à ajouter de l'éthylène glycol à un complexe précurseur synthétisé en mélangeant du vanadate d'ammonium et de l'acide oxalique, puis à calciner.

5. Le procédé de fabrication selon la revendication 4 ou le catalyseur de dénitration selon l'une quelconque des revendications 1 à 3, sachant que le rapport molaire de l'acide oxalique au vanadate d'ammonium est d'au moins 2.

6. Le procédé de fabrication selon la revendication 4 ou le catalyseur de dénitration selon l'une quelconque des revendications 1 à 3, sachant que le rapport molaire du vanadate à l'acide oxalique est compris entre 1:2 et 1:3.

7. Le procédé de fabrication selon la revendication 4 ou le catalyseur de dénitration selon l'une quelconque des revendications 1 à 3, sachant que le rapport molaire du vanadate à l'acide oxalique est compris entre 1:9 et 1:15.

# FIG. 1A

# FIG. 1B

Temperature dependency of NO conversion rate

# FIG. 2

# FIG. 3A

NO conversion rate

# FIG. 3B

Reaction rate

# FIG. 4

| | |
|---|---|
| ——————— | 1. Va1ox3-0 |
| ·········· | 2. Va1ox3-EG1 |
| — — — | 3. Va1ox3-TG1 |
| — — -· | 4. Va1ox3-BG1 |
| ·····-·· | 5. Va1ox3-PG1 |
| — — — - | 6. Va1ox0-EG1 |
| ——————— | 7. V1ox0-EG1 |
| --------- | 8. Va1ox2-EG1 |
| — — —— | 9. V1-ox1EG1 |
| — — — — | 10. Va1ox6-EG2 |
| ·········· | 11. Va1ox9-EG3 |
| — — — — | 12. Va1ox15-EG5 |

# FIG. 5A

NO conversion rate

# FIG. 5B

Reaction rate

# FIG. 6

# FIG. 7A

# FIG. 7B

# FIG. 7C

# FIG. 8A

# FIG. 8B

# FIG. 8C

# FIG. 9

## FIG. 10A

## FIG. 10B

# FIG. 11A

# FIG. 11B

# FIG. 11C

# FIG. 11D

# FIG. 12

# FIG. 13

# FIG. 14

# FIG. 15A

# FIG. 15B

# FIG. 16

**EP 3 936 228 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004275852 A
- JP 6093101 B
- US 2018272278 A